# EUROPEAN PATENT SPECIFICATION

(11) **EP 4 095 113 B1**
(45) Date of publication and mention of the grant of the patent: **25.06.2025**
(21) Application number: 22175131.6
(22) Date of filing: 24.05.2022
(51) Int. Cl.: C04B 35/573, C04B 35/80

(54) **METHOD OF FORMING CERAMIC MATRIX COMPOSITE**
VERFAHREN ZUR HERSTELLUNG EINES VERBUNDWERKSTOFFS MIT KERAMISCHER MATRIX
PROCÉDÉ DE FORMATION DE COMPOSITE À MATRICE CÉRAMIQUE

(30) Priority: 28.05.2021 JP 2021090193
(43) Date of publication of application: 30.11.2022
(73) Proprietor: Mitsubishi Heavy Industries Aero Engines, Ltd., Komaki-shi, Aichi 485-0826, (JP); The University of Tokyo, Bunkyo-ku, Tokyo 113-8654 (JP)
(72) Inventor: AKIYAMA, Hiromichi, Tokyo, 100-8332 (JP); NISHIGUCHI, Kiichi, Tokyo, 100-8332 (JP); SEKIGAWA, Takahiro, Tokyo, 100-8332 (JP); FUKUSHIMA, Akira, Aichi, 485-0826 (JP); YOSHIKAWA, Takeshi, Tokyo, 113-8654 (JP); ESAKA, Hisao, Tokyo, 113-8654 (JP)
(74) Representative: Studio Torta S.p.A.

(56) References cited:
- US-A1- 2007 007 678
- US-A1- 2018 244 583

## Description

### Field

The present disclosure relates to a method of forming a ceramic matrix composite.

### Background

Conventionally, a method of manufacturing a ceramic matrix composite using the melt-infiltrated (MI) method is known as a method of forming a ceramic matrix composite (see, for example, Patent Literature 1). In this manufacturing method, a fiber reinforcement material is impregnated with a matrix slurry containing a resin binder and a pore-forming agent, whereby a preform is obtained. The preform is then heated for carbonization of the resin binder while pore formation is promoted by the action of the pore-forming agent. A porous preform is thus formed. In this manufacturing method, the pores of the porous preform are then filled with molten silicon, whereby silicon carbide is formed.

### Citation List

### Patent Literature

Patent Literature 1: Japanese Laid-open Patent Publication No. 2013-241327
Patent Literature 2: US 2018/244583

### Summary

### Technical Problem

A matrix slurry, which is base resin, may contain a large amount of filler containing carbon, silicon carbide, or the like. In this case, when a porous preform is formed using a pore-forming agent as described in Patent
Literature 1, an impregnation path to be impregnated with the molten silicon is fragmented by the filler, and it may be therefore difficult to form an appropriate impregnation path. Without an appropriate impregnation path formed, impregnation with molten silicon may stop halfway, and some areas may be left not impregnated. As a result, defects such as voids or cracks are likely to occur. When pores formed by the pore-forming agent are large, unreacted silicon that has not reacted with carbon may be left even after impregnation with molten silicon. This may reduce the strength of the formed ceramic matrix composite.

Given these inconveniences, the subject of the present disclosure is to provide a method of forming a ceramic matrix composite and a ceramic matrix composite that enable suitable formation of a ceramic matrix composite while defects in formation are prevented from occurring.

### Solution to Problem

The method of forming a ceramic matrix composite impregnated with molten metal or alloy, as defined in claim 1, includes: stacking a plurality of fiber layers that are layers of reinforced fibers impregnated with base resin to form a laminate in which a matrix layer containing fibers extending in a direction of impregnation with the molten metal or alloy is disposed between the fiber layers; forming an impregnation path in the matrix layer entirely in an in-plane direction perpendicular to a direction of the stacking in the laminate by carbonizing the formed laminate; and impregnating, with the molten metal or alloy, the laminate in which the impregnation path has been formed.

A ceramic matrix composite according to another aspect of the present disclosure, which is not part of the invention as defined in the claims, includes: a plurality of fiber layers that are layers containing ceramic-matrix reinforced fibers; and a matrix layer provided in the fiber layers stacked in a stacking direction, the matrix layer having been formed in a manner that an impregnation path formed entirely in an in-plane direction perpendicular to the stacking direction of the fiber layers is impregnated with molten metal or alloy to react.

### Advantageous Effects of Invention

According to the present disclosure, a ceramic matrix composite can be suitably formed while defects in formation are prevented from occurring.

### Brief Description of Drawings

FIG. 1 is a sectional view illustrating a ceramic matrix composite.
FIG. 2 illustrates an example of a method of forming a ceramic matrix composite according to the present embodiment.
FIG. 3 illustrates another example of the method of forming a ceramic matrix composite according to the present embodiment.

### Description of Embodiments

The following describes an embodiment according to the present disclosure in detail based on the drawings. This invention is not limited by this embodiment. The components in the following embodiments include those that are substitutable and easy for those skilled in the art, or those that are substantially the same. Furthermore, the components described below can be combined as appropriate, and, when there are a plurality of embodiments, any two or more of the embodiments can be combined.

### Embodiment

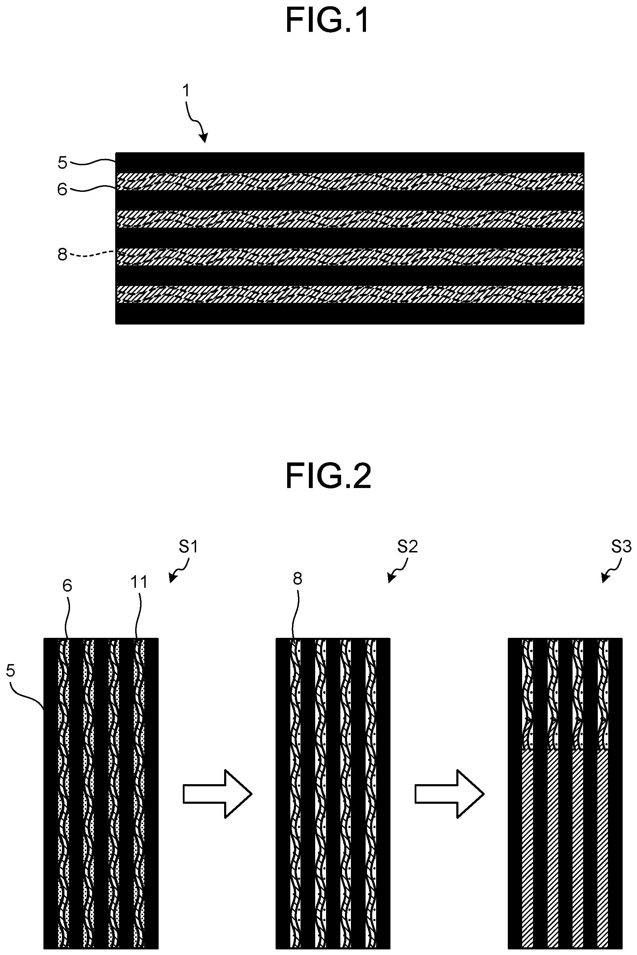

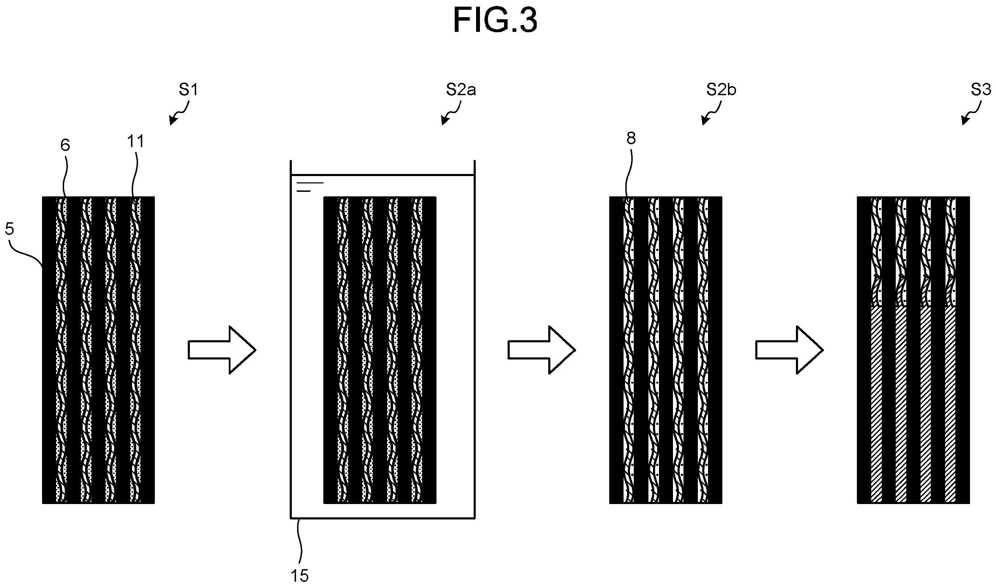

FIG. 1 is a sectional view illustrating a ceramic matrix composite. FIG. 2 illustrates an example of a method of forming a ceramic matrix composite according to the present embodiment. FIG. 3 illustrates an example of a method of forming a ceramic matrix composite according to the present embodiment.

The method of forming a ceramic matrix composite according to the present embodiment is a forming method using the melt impregnation process (MI process). The ceramic matrix composite is, for example, a silicon carbide (SiC) composite, specifically, a SiC fiber-reinforced SiC matrix composite (SiC/SiC composite). With reference to FIG. 1, a ceramic matrix composite 1, which is a SiC/SiC composite, is described first before the method of forming a ceramic matrix composite is described. A ceramic matrix composite is not limited to a SiC/SiC composite and may be any ceramic matrix composite that can be formed using the forming method according to the present embodiment.

### Ceramic Matrix Composite

As illustrated in FIG. 1, the ceramic matrix composite 1 has fiber layers 5 each containing ceramic-matrix reinforced fibers and a matrix layer 6 provided between each two layers of the fiber layers 5 stacked in a stacking direction.

The fiber layers 5 are layers mainly made of fibers, for which SiC fibers are used as the ceramic-matrix reinforced fibers. The fiber layer 5 is formed in a manner that a green body is obtained by laminating and curing prepregs each obtained by impregnating base resin with carbon fibers; and the green body is carbonized and is impregnated with and caused to react with molten silicon, which is provided as molten metal or alloy. The prepregs are each formed using, for example, a unidirectional material in which the SiC fibers extend in one direction, and are stacked so that directions in which the SiC fibers in the different prepregs can be different. The base resin is, for example, thermosetting resin such as epoxy resin. The base resin contains filler, and at least one of powdered carbon and powdered silicon carbide is used as the filler. Thus, the base resin is a thermosetting resin that contains filler.

The matrix layer 6 is a layer containing silicon carbide. The matrix layer 6 is formed in such a manner that: an impregnation path 8 is formed in a manner that fibers 11 (see FIG. 2) described below are carbonized; and this impregnation path 8 is impregnated with and reacted with molten silicon. The impregnation path 8 in the matrix layer 6 is formed so that a space to be filled with molten silicon can be entirely continuous in an in-plane direction perpendicular to the stacking direction of the fiber layers 5. As a result of impregnating the impregnation path 8 with molten silicon, the matrix layer 6 becomes a layer that has silicon carbide formed along the impregnation path 8.

### Method of Forming Ceramic Matrix Composite

Next, the method of forming the ceramic matrix composite 1 is described with reference to FIG. 2. In the method of forming the ceramic matrix composite 1, a laminate that serves as a green body, in which the fiber layers 5 and the matrix layers 6 are stacked on one another, is formed (step S1). At step S1, a plurality of prepregs in each of which the fiber layer 5 and the matrix layer 6 without the fibers 11 are integrated are stacked, and the fibers 11 are placed between each two layers of the prepregs. In other words, at step S1, the prepregs and the fibers 11 are consecutively stacked alternately. At step S1, optionally, each of the prepregs and the corresponding fibers 11 may be integrated into a sheet, and a plurality of such sheets may be consecutively laminated. Thereafter, at step S1, the laminated prepregs are heated, whereby the matrix layers 6 are molten and integrated with the fibers 11. The laminated prepregs are further heated, whereby the fiber layers 5 and matrix layers 6 are thermally cured to form the laminate. As a result, the matrix layers 6 each containing the fibers 11 extending entirely in an in-plane direction of the laminate is formed. The fibers 11 used in the matrix layers 6 are inorganic, such as carbon fibers having binder resin attached thereto or SiC fibers having binder resin attached thereto, or organic fibers. The organic fibers may have binder resin attached thereto. The fibers 11 used in the matrix layers 6 take the form of non-woven cloth, woven cloth, or a unidirectional material. In the fibers 11 used in the matrix layers 6, the fibers therefore extend in directions along in-plane directions of the laminate.

When the matrix layers 6 are carbonized, the impregnation paths 8 are formed in directions (in-plane directions) in which the fibers 11 extend, through carbonization of the binder resin in a case using carbon fibers or SiC fibers as the fibers 11 or through carbonization of the fibers themselves in a case using organic fibers as the fibers 11. In this stage, the binder resin and the organic fibers are resins having lower decomposition temperatures than that of the base resin of the fiber layers 5. For example, when epoxy resin is used as the base resin, polyvinyl chloride (PVC), poly methyl methacrylate (PMMA, which is also referred to as acrylic), or the like is used as the binder resin and the organic fibers.

The fibers 11 in the matrix layer 6 have a fiber diameter of 0.5 to 20 µm, more preferably 1 to 7 µm, and still more preferably 1 to 5 µm. The fibers 11 in the matrix layer 6 have a weight per unit area of 20 g/m² or less and preferably 8 g/m² or less.

In the method of forming the ceramic matrix composite 1, the formed laminate is carbonized, whereby the impregnation paths 8 are formed in the matrix layers 6 entirely in in-plane directions of the laminate (step S2). At step S2, the laminate is carbonized, whereby the laminate in which the impregnation paths 8 have been formed is formed as a precursor of the ceramic matrix composite 1. At step S2, in a case using carbon fibers or SiC fibers as the fibers 11 in the matrix layers 6, the binder resin attached to the fibers 11 are carbonized. As a result, the impregnation paths 8 to be impregnated with molten silicon are formed, and carbon is formed inside the impregnation paths 8. At step S2, in a case using organic fibers as the fibers 11 in the matrix layers 6, the fibers 11 themselves are carbonized. As a result, the impregnation paths 8 to be impregnated with molten silicon are formed, and carbon is formed inside the impregnation paths 8. The impregnation paths 8 formed at step S2 also function as degassing paths for decomposition gas generated through carbonization of the base resin, thus allowing the laminate to be prevented from cracking.

Thereafter, in the method of forming the ceramic matrix composite 1, the laminate in which the impregnation paths 8 have been formed that serves as a precursor is impregnated with molten silicon (step S3). At step S3, the laminate is impregnated with molten silicon along the impregnation paths 8 formed at step S2. Molten silicon with which the laminate is impregnated becomes silicon carbide by reacting with carbon in the impregnation paths 8, carbon in the carbonized base resin, and carbon in the filler contained in the base resin. When the fibers 11 in the matrix layers 6 are carbon fibers, molten silicon reacts with the carbon fibers and produces SiC fibers. The method of forming the ceramic matrix composite 1 ends by executing step S3.

For example, it has been confirmed that the impregnation paths 8 are impregnated with molten silicon in a case where: a filler-containing base resin, which is difficult to impregnate, is applied as the base resin of the fiber layers 5; a non-woven carbon fiber cloth having a fiber diameter of 7 µm and a weight per unit area of 8 g/m² is applied as the fibers 11; and PVA binder resin that accounts for 16% by weight of this non-woven cloth is attached to this non-woven cloth.

Next, with reference to FIG. 3, another example of a method of forming ceramic matrix composite 1 is described. In the molding method of FIG. 3, at step S2 of forming the impregnation path 8 in the matrix layer 6, the fibers 11 in the matrix layer 6 in the laminate or the binder resin attached to the fibers 11 is dissolved before the laminate is carbonized. In other words, in the molding method of FIG. 3, when the fibers 11 used in the matrix layer 6 are to be dissolved, fibers that are dissolved by a solvent are used. In the molding method of FIG. 3, when the fibers 11 used in the matrix layer 6 are not dissolved, it is preferable that the binder resin be attached to the fibers 11. Steps S1 and S3 illustrated in FIG. 3 are the same as steps S1 and S3 illustrated in FIG. 2, and description thereof is therefore omitted.

At step S2, the formed laminate is immersed in a liquid bath 15 filled with a solvent, whereby the fibers 11 or the binder resin in the matrix layer 6 in the laminate is dissolved (step S2a). For example, acid is used as the solvent. At step S2a, the fibers 11 or the binder resin in the matrix layer 6 is dissolved, whereby the impregnation path 8 is formed in the matrix layer 6 entirely in an in-plane direction of the laminate. At step S2a, after the fibers 11 are dissolved, the laminate is pulled out of the liquid bath 15 and the laminate is washed as appropriate. Subsequently, at step S2, the laminate from which the fibers 11 or the binder resin has been removed is carbonized, whereby the base resin remaining in the matrix layer 6 is carbonized (step S2b). At step S2b, carbonizing the base resin and the remaining fibers 11 results in formation of carbon in the impregnation path 8. This is possible because the impregnation paths 8 has already been formed at step S2a.

Thus, also in the molding method of FIG. 3, the impregnation path 8 is formed, and carbon is formed inside the impregnation path 8, at step S2. When the hollow region (cavity) in the impregnation path 8 is large, it is difficult to have carbon formed in the impregnation path 8 in the carbonization process at step S2. At step S3 that follows, however, the impregnation path 8 becomes silicon carbide as a result of an impregnation process, where silicon carbide is formed through chemical combination of carbon supplied from the surroundings of the impregnation path 8 and molten silicon that has penetrated the impregnation path 8.

### Reference Signs List

- 1: Ceramic matrix composite
- 5: Fiber layer
- 6: Matrix layer
- 8: Impregnation path
- 11: Fiber
- 15: Liquid bath

## Claims

1. A method of forming a ceramic matrix composite with being impregnated with molten metal or alloy, the method comprising:
stacking a plurality of fiber layers (5) that are layers of reinforced fibers impregnated with base resin to form a laminate in which a matrix layer (6) containing fibers (11) extending in a direction of impregnation with the molten metal or alloy is disposed between the fiber layers (5);
forming an impregnation path (8) in the matrix layer (6) entirely in an in-plane direction perpendicular to a direction of the stacking in the laminate by carbonizing the formed laminate; and
impregnating, with the molten metal or alloy, the laminate in which the impregnation path (8) has been formed, wherein
the fibers (11) in the matrix layer (6) are carbon fibers to which binder resin is attached, inorganic fibers to which binder resin is attached, or organic fibers, and
the binder resin and the organic fibers are resins having lower decomposition temperatures that of than the base resin.

2. The method of forming a ceramic matrix composite according to claim 1, wherein the fibers (11) in the matrix layer (6) take a form of non-woven cloth, woven cloth, or a unidirectional material.

3. The method of forming a ceramic matrix composite according to claim 1 or 2, wherein the fibers (11) in the matrix layer (6) have a fiber diameter of 0.5 to 20 µm.

4. The method of forming a ceramic matrix composite according to claim 3, wherein the fibers (11) in the matrix layer (6) have a fiber diameter of 1 to 7 µm.

5. The method of forming a ceramic matrix composite according to claim 4, wherein the fibers (11) in the matrix layer (6) have a fiber diameter of 1 to 5 µm.

6. The method of forming a ceramic matrix composite according to any one of claims 1 to 5, wherein the fibers (11) in the matrix layer (6) have a weight per unit area of 20 g/m2 or less.

7. The method of forming a ceramic matrix composite according to claim 6, wherein the fibers (11) in the matrix layer (6) have a weight per unit area of 8 g/m2 or less.

8. The method of forming a ceramic matrix composite according to any one of claims 1 to 7, wherein forming the impregnation path (8) in the matrix layer (6) includes dissolving the fibers (11) in the matrix layer (6) in the laminate before the laminate is carbonized.

## Patentansprüche

1. Verfahren zum Bilden eines Keramikmatrix-Verbundwerkstoffs, der mit geschmolzenem Metall oder einer geschmolzenen Legierung imprägniert ist, wobei das Verfahren umfasst:
Stapeln einer Vielzahl von Faserschichten (5), die Schichten aus verstärkten Fasern sind, die mit Basisharz imprägniert sind, um ein Laminat zu bilden, in dem eine Matrixschicht (6), die Fasern (11) enthält, die sich in einer Imprägnierrichtung mit dem geschmolzenen Metall oder der geschmolzenen Legierung erstrecken, zwischen den Faserschichten (5) angeordnet ist;
Bilden eines Imprägnierpfads (8) in der Matrixschicht (6) vollständig in einer Richtung in der Ebene senkrecht zu einer Richtung des Stapelns in dem Laminat durch Karbonisieren des gebildeten Laminats; und
Imprägnieren des Laminats, in dem der Imprägnierpfad (8) gebildet wurde, mit dem geschmolzenen Metall oder der geschmolzenen Legierung, wobei
die Fasern (11) in der Matrixschicht (6) Kohlenstoffasern, an die Bindemittelharz gebunden ist, anorganische Fasern, an die Bindeharz gebunden ist, oder organische Fasern sind, und
das Bindeharz und die organischen Fasern Harze mit niedrigeren Zersetzungstemperaturen als das Basisharz sind.

2. Verfahren zur Herstellung eines Keramikmatrix-Verbundwerkstoffs nach Anspruch 1, wobei die Fasern (11) in der Matrixschicht (6) die Form eines Vliesstoffs, eines gewebten Stoffs oder eines unidirektionalen Materials annehmen.

3. Verfahren zur Herstellung eines Keramikmatrix-Verbundwerkstoffs nach Anspruch 1 oder 2, wobei die Fasern (11) in der Matrixschicht (6) einen Faserdurchmesser von 0,5 bis 20 µm aufweisen.

4. Verfahren zur Herstellung eines Keramikmatrix-Verbundwerkstoffs nach Anspruch 3, wobei die Fasern (11) in der Matrixschicht (6) einen Faserdurchmesser von 1 bis 7 µm aufweisen.

5. Verfahren zur Herstellung eines Keramikmatrix-Verbundwerkstoffs nach Anspruch 4, wobei die Fasern (11) in der Matrixschicht (6) einen Faserdurchmesser von 1 bis 5 µm aufweisen.

6. Verfahren zur Herstellung eines Keramikmatrix-Verbundwerkstoffs nach einem der Ansprüche 1 bis 5, wobei die Fasern (11) in der Matrixschicht (6) ein Gewicht pro Flächeneinheit von 20 g/m2 oder weniger aufweisen.

7. Verfahren zur Herstellung eines Keramikmatrix-Verbundwerkstoffs nach Anspruch 6, wobei die Fasern (11) in der Matrixschicht (6) ein Gewicht pro Flächeneinheit von 8 g/m2 oder weniger aufweisen.

8. Verfahren zur Herstellung eines Keramikmatrix-Verbundwerkstoffs nach einem der Ansprüche 1 bis 7, wobei das Bilden des Imprägnierpfads (8) in der Matrixschicht (6) das Auflösen der Fasern (11) in der Matrixschicht (6) im Laminat beinhaltet, bevor das Laminat karbonisiert wird.

## Revendications

1. Procédé de formation d'un composite de matrice céramique imprégné avec un alliage ou métal fondu, le procédé comprenant :
l'empilement d'une pluralité de couches de fibres (5) qui sont des couches de fibres renforcées imprégnées avec une résine de base pour former un stratifié dans lequel une couche de matrice (6) contenant des fibres (11) s'étendant dans la direction d'imprégnation avec l'alliage ou métal fondu est disposée entre les couches de fibres (5) ;
la formation d'un trajet d'imprégnation (8) dans la couche de matrice (6) entièrement dans une direction dans le plan perpendiculaire à la direction de l'empilement dans le stratifié par carbonisation du stratifié formé ; et
l'imprégnation, avec l'alliage ou métal fondu, du stratifié dans lequel le trajet d'imprégnation (8) a été formé,
dans lequel
les fibres (11) dans la couche de matrice (6) sont des fibres de carbone auxquelles une résine liante est attachée, des fibres inorganiques auxquelles une résine liante est attachée, ou des fibres organiques, et
la résine liante et les fibres organiques sont des résines ayant des températures de décomposition inférieures à celle de la résine de base.

2. Procédé de formation d'un composite de matrice céramique selon la revendication 1, dans lequel les fibres (11) dans la couche de matrice (6) prennent la forme d'une étoffe non tissée, d'une étoffe tissée, ou d'un matériau unidirectionnel.

3. Procédé de formation d'un composite de matrice céramique selon la revendication 1 ou 2, dans lequel les fibres (11) dans la couche de matrice (6) ont un diamètre de fibre de 0,5 à 20 µm.

4. Procédé de formation d'un composite de matrice céramique selon la revendication 3, dans lequel les fibres (11) dans la couche de matrice (6) ont un diamètre de fibre de 1 à 7 µm.

5. Procédé de formation d'un composite de matrice céramique selon la revendication 4, dans lequel les fibres (11) dans la couche de matrice (6) ont un diamètre de fibre de 1 à 5 µm.

6. Procédé de formation d'un composite de matrice céramique selon l'une quelconque des revendications 1 à 5, dans lequel les fibres (11) dans la couche de matrice (6) ont une masse par unité de surface de 20 g/m² ou moins.

7. Procédé de formation d'un composite de matrice céramique selon la revendication 6, dans lequel les fibres (11) dans la couche de matrice (6) ont une masse par unité de surface de 8 g/m² ou moins.

8. Procédé de formation d'un composite de matrice céramique selon l'une quelconque des revendications 1 à 7, dans lequel la formation du trajet d'imprégnation (8) dans la couche de matrice (6) inclut la dissolution des fibres (11) dans la couche de matrice (6) dans le stratifié avant que le stratifié soit carbonisé.
